# EUROPEAN PATENT APPLICATION

(11) **EP 1 365 548 A1**
(43) Date of publication of application: **26.11.2003**
(21) Application number: 02291246.3
(22) Date of filing: 21.05.2002
(51) Int. Cl.: H04L 12/56, H04L 12/46

(54) **Method for encapsulating variable length packets, and related data packet encapsulator and decapsulator**

(71) Applicant: ALCATEL, 75008 Paris (FR)
(72) Inventor: Six, Erwin Alfons Constant, 9270 Laarne (BE); Ringoot, Edwin Augustus Philimena, 4564 CW St. Jansteen (NL); Gyselings, Tim, 2100 Deurne (Antwerp) (BE)
(74) Representative: Narmon, Gisèle

(57) **Abstract**

Variable length data packets are encapsulated by adding an Asynchronous Transfer Mode (ATM) compatible, five octet long packet header (PACKET-HDR) to each data packet. The fifth octet of this packet header constitutes a header error check field (HEC).

## Description

The present invention relates to encapsulation of variable length data packets such as the encapsulation of Internet Protocol (IP) packets or Ethernet frames for transmission over a TDMA based point-to-multipoint system, for instance a Passive Optical Network (PON).

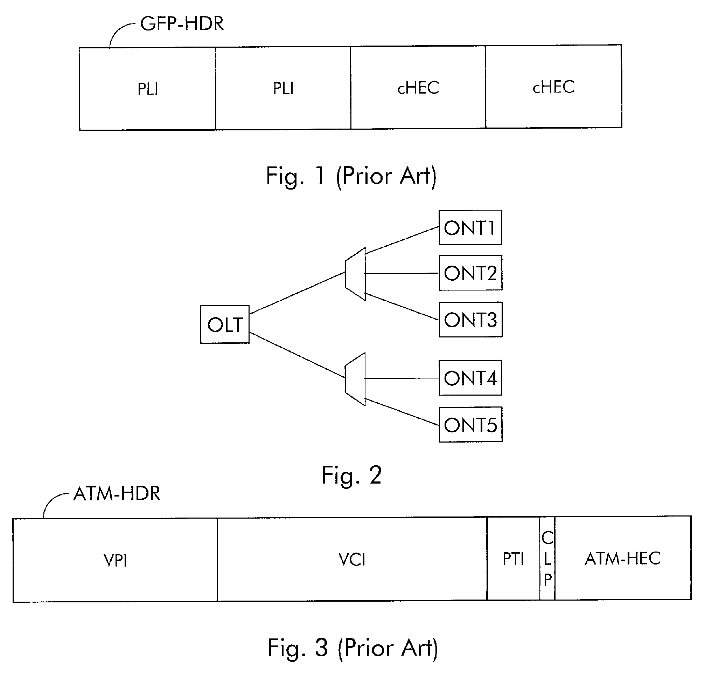

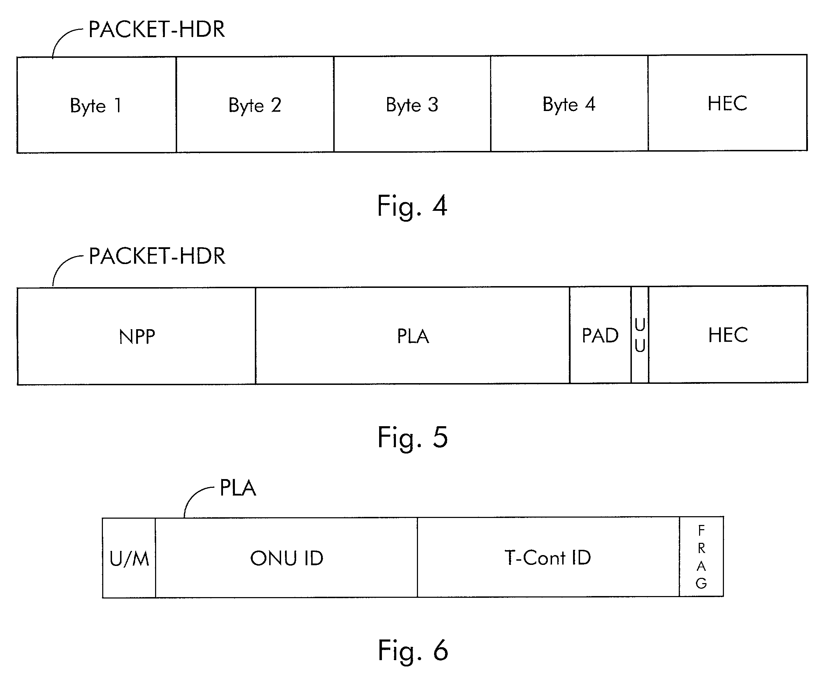

A technique for encapsulating variable length data packets is already known from *the draft ANSI Specification T1X1.5*/*2000-024R3 entitled "Generic Framing Procedure (GFP)*". Therein, a procedure is defined for encapsulating octet-synchronous, variable length payloads received from a higher level client into envelopes or frames having a 4 octet long header, called the GFP Core Header. This GFP Core Header consists of a 2 octet long length indicator field (PLI) that contains a binary number representing the number of octets in the payload area, followed by a two octet long header error check field (cHEC) that contains a CRC-16 generated sequence that protects integrity of the contents of the GFP Core Header. The format of the GFP envelope or GFP frame is shown in Figure 3 of the above cited draft ANSI Specification, whereas the GFP Core Header format is shown in Figure 4 thereof, and in Fig. 2 of this patent application.

Although the Generic Framing Procedure uses a lot of Asynchronous Transfer Mode (ATM) Layer 2 principals, the header structure of GFP frames is not compatible with the ATM header structure. When applied in next generation Passive Optical Networks such as a Gigabit PON wherein operators desire to transport both ATM services and packet based services, the frame headers for the ATM based services and those for the packet based services would differ in length, requiring separate processing hardware for the ATM services and the packet based services. Also, the header error check fields in the frame headers for ATM based services and those for packet based services would differ, requiring different byte and frame synchronisation procedures and logic.

Another drawback of the Generic Framing Procedure, is that it is only defined to work over an octet synchronous transport network. As a consequence, the GFP encapsulation would require some adaptations when applied for transmission over downstream Passive Optical Network channels because the bear downstream PON channel is not octet synchronous.

An object of the present invention is to provide technology for encapsulation of variable length data packets which allows to use common hardware blocks for processing both ATM and packet based services, in order to ease creating a system that is capable of operating in both an ATM based and packet based mode, or a system that is capable of transporting both ATM services and packet based services simultaneously.

Another object of the present invention is to provide a variable length packet encapsulation technique that allows to define a generic synchronization mechanism for both ATM and packet based transport.

Yet another object of the present invention is to disclose a variable length packet encapsulation technique that allows a single system to be configured by an operator as either ATM based or packet based merely through software download.

According to the present invention, these objects are realised by the method for encapsulating variable length data packets defined in claim 1, the method for decapsulating variable length data packets defined in claim 11, the variable length data packet encapsulator defined in claim 12, and the variable length data packet decapsulator defined in claim 14.

Indeed, according to the present invention the packet encapsulation header for transporting variable length packets will consist of five bytes, the fifth byte of which constitutes a header error check field. Such a packet header is structurally compatible with the ATM header. Thus, common hardware blocks can process the headers of both ATM cells and variable length packets, and a system such as a Passive Optical Network can be configured either as an ATM PON or Packet PON by downloading the appropriate control software for the common hardware. Also, a generic Layer 2 synchronization procedure based on the header error check field can be defined for both ATM cells and packets.

It is remarked here that an alternative technique described in literature that enables to use the same hardware blocks for processing fixed length cells and variable length packets is generally known as "Packet over Cell" transfer. A drawback of this technique wherein for instance Ethernet packets or IP packets are segmented and encapsulated into ATM cells, is the additional overhead that is introduced thereby and the extensive complexity increase due to the fact that full ATM layer functionality is added, and a translation between the packet layer parameters and the ATM layer parameters becomes unavoidable.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

An optional feature of the variable length data packet encapsulation method according to the present invention is defined by claim 2.

This way, the last byte of the packet header is equal to the header error check field of the Asynchronous Transfer Mode standard specification which even further increases the commonalities between the required hardware and software for procesing ATM cells and variable length packets. Alternatively, any other error check code could be inserted in the fifth octet of the packet header.

Also an optional feature of the variable length data packet encapsulation technique according to the present invention is defined by claim 3.

This way, the packet header contains an indication of the length of the data packet which further simplifies the synchronization procedure because this length field will be used to determine the space between the header error check fields of successive variable length data packets.

Another optional feature of the variable length data packet encapsulation technique according to the present invention is defined by claim 4.

This way, the packet header carries information on the destination of the packet.

Yet another optional feature of the variable length data packet encapsulation technique according to the present invention is defined by claim 5.

Thus, the address information in the packet header can identify either a single destination of the packet in case of unicasting or multiple destinations of the packet in case of multicasting.

A further optional feature of the variable length data packet encapsulation technique according to the present invention is defined by claim 6.

Hence, the packet header can identify the type of data contained in the packet, e.g. real time voice packets, so that the data packet can be handled with the appropriate quality of service.

Optional features of the variable length data packet encapsulation technique according to the present invention enabling to indicate the amount of padding bytes and the end of a fragment in the packet header are defined by claims 7 and 8.

Still an optional feature of the variable length data packet encapsulation technique according to the present invention is defined by claim 9.

This way, the receiver knows exactly the contents of the header error check field, which would not be true in case random scrambling would be applied.

The above mentioned and other objects and features of the invention will become more apparent and the invention itself will be best understood by referring to the following description of an embodiment taken in conjunction with the accompanying drawings wherein:
Fig. 1 is a diagram of the structure of a state of the art Generic Framing Procedure core header, GFP-HDR;
Fig. 2 is a schematic drawing of a Passive Optical Network PON wherein an embodiment of the present invention is used;
Fig. 3 is a diagram of the structure of a state of the art Asynchronous Transfer Mode header, ATM-HDR;
Fig. 4 is a diagram of the structure of a data packet header according to the present invention, PACKET-HDR;
Fig. 5 is a diagram of the structure of a data packet header according to a particular embodiment of the present invention, PACKET-HDR; and
Fig. 6 is a diagram of the structure of the address field PLA in the data packet header PACKET-HDR of Fig. 5.

In the passive optical network PON drawn in Fig. 2, a number of optical network terminations, ONT1, ONT2, ONT3, ONT4 and ONT5, are coupled to an optical line termination OLT via the cascade of optical fibres and passive splitters/combiners to generate a multipoint-to-point network. The optical line termination OLT incorporates a data packet encapsulator or framer according to the present invention, whereas the optical network terminations, ONT1, ONT2, ONT3, ONT4 and ONT5, incorporate a data packet decapsulator or deframer as well as synchronization logic according to the present invention. The functioning of the framer, deframer and synchronization logic are described in the following paragraphs.

The passive optical network PON is able to transport both ATM cells and packets. The passive optical network thereto can be configured by the operator either as an ATM based PON or on Ethernet packet based PON. In a possible scenario for instance, an operator can start deploying an ATM based PON compatible with its existing metropolitan network, and afterwards can switch to a packet based PON whenever such change seems economically feasible. To configure the passive optical network PON as a packet based PON, the operator will have to download and install new software, no hardware adaptations will be required.

As long as the passive optical network PON is configured as an ATM based PON, the downstream frame structure will correspond to that of ITU-T Standard Specification G.983.1. Consecutive ATM cells are put in a sequential stream. Particular positions in the downstream frame are reserved for Physical Layer Operation And Maintenance (PLOAM) cells, which are cells that carry framing information, physical messages, and the grants allocating upstream bandwidth to the different optical network terminations. The ATM cells that are inserted in the downstream frames have the format described in ITU-T Specification 1.432.1. Each ATM cell has a length of 53 bytes, whereof the first five bytes constitute an ATM header as depicted in Fig. 3, and the remaining 48 bytes constitute a payload section to be filled with data. The five octet long header contains the Virtual Path Identifier VPI, the Virtual Channel Identifier VCI, the Payload Type Identifier PTI, the Cell Loss Priority bit CLP, and a one octet long header error check field ATM-HEC wherein a CRC error check code with generating polynomial of x⁸+x²+x+1 is embedded. This error check field ATM-HEC is used in the receiving optical network termination for header integrity verification and also for byte and cell synchronization purposes. Indeed, byte and cell synchronization is reached when a predetermined amount of consecutive ATM-HEC fields have a match. The synchronization logic in the receiving optical network termination thereto looks for the cell header in the received byte stream during a phase called the HUNT phase. When the cell header is found, the so called PRESYNC state is reached, and the synchronization logic starts looking for the ATM-HEC field. Because ATM cells have a fixed length of 53 bytes, the space between consecutive ATM-HEC fields in the received byte stream is fixed. The byte and cell SYNC will be reached as soon as a consecutive number of ATM-HEC fields have a match. Thereafter, payload scrambling synchronization will start as well as PON frame synchronization as described in ITU Specification G.983.1, but this is outside the scope of the present patent application.

When operated as a packet based PON, variable length Ethernet packets will be sent over the downstream channel, each Ethernet packet being extended with a packet encapsulation header, PACKET-HDR, as depicted in Fig. 4. This packet encapsulation header also consists of 5 bytes, the last byte being a header error check field HEC. In the preferred embodiment of this invention, the header error check field HEC contains a CRC error check code with generating polynomial x⁸+x²+x+1, equal to the ATM header error check code. Further details of the structure of the packet encapsulation header PACKET-HDR used in the preferred implementation of the current invention, are shown in Fig. 5 and Fig. 6. The first four bytes of the packet header PACKET-HDR therein contain a length field or next packet pointer field NPP whose contents is indicative for the payload length of the variable length Ethernet packet, a PON local address field PLA that contains address information on the destination of the Ethernet packet, a padding field PAD, indicating the number of padding bytes in the Ethernet packet and a User to User indication field UU, indicating that the Ethernet packet constitutes the end of a larger fragment that was segmented and spread over a number of Ethernet packets. The respective sizes of the next packet pointer field NPP, the PON local address field PLA, the padding field PAD and the User to User indication field UU correspond to the sizes of the Virtual Path Identifier field VPI, Virtual Channel Identifier field VCI, Payload Type Identifiert field PTI and Cell Loss Priority field CLP of the above described ATM cell header ATM-HDR. This way, the ATM cell header processing hardware in the receiving optical network termination can be reused optimally to process also the packet header PACKET-HDR of the variable length Ethernet packets. Obviously, this is only an implementation choice and no requirement under the present invention. As illustrated by Fig. 6, the PON local address field PLA of the packet header PACKET-HDR can be further specified to allow addressing of both unicast and multicast destinations. Thereto, a multicast indication field U/M, indicating whether the Ethernet packet has to be delivered to a single destination or multiple destinations, can be foreseen. The identification of the destination - either a unicast or multicast destination - is embedded in a destination identifier field, ONU ID, and a traffic container identification field T-Cont ID is foreseen to identify what class of service the data contained in the Ethernet packet belong to. The intelligence to determine the required quality of service (QoS) is in the optical line termination OLT and can for instance be in accordance with the QoS specifiactions defined by FSAN. The PON local address field PLA also contains a fragmentation field FRAG for indicating that the packet contains a fragment of a larger message.

At the receiving optical network termination, the header error check field HEC is used for header integrity verification and for byte and packet synchronization purposes in a similar way as described above for ATM cells. Byte and packet synchronization is again reached when a predetermined amount of consecutive HEC fields have a match. The synchronization logic in the receiving optical network termination monitors the received byte stream during a phase called the HUNT phase to find the variable length packet header PACKET-HDR. When the packet header is found, the so called PRESYNC state is reached, and the synchronization logic starts looking for the HEC field. The information on the packet payload length in the Next Packet Pointer field NPP is now used to determine the space between consecutive HEC fields in the received byte stream. The byte and packet SYNC state will be reached as soon as a consecutive number of HEC fields have a match. Thereafter, payload scrambling synchronization will start as well as PON frame synchronization as described in ITU Specification G.983.1, but this is outside the scope of the present patent application.

For both ATM and packet configuration, it is preferred to use a static scrambling for the header fields, i.e. either ATM-HDR or PACKET-HDR, because the receiver exactly knows how the header will look like this way. The payload can be scrambled and descrambled with normal scrambling operations, for instance in line with ITU Specification I.432.1

It is remarked that although use of the variable length data packet encapsulation technique according to the present invention in a passive optical network has been described above, the invention is applicable in any kind of network or connection whereon both ATM cells and variable length data packets can be transferred. For instance, a TDMA based multipoint-to-point access system such as a Hybrid Fibre Coax (HFC) system, or a point-to-point connection such as an ADSL or VDSL connection whereover both ATM and packet based services are supported could benefit from the invention similarly.

Another remark is that the passive optical network PON described above is configurable either in an ATM mode or a packet based mode. Alternatively, one could think off a passive optical network wherein ATM and packet services are transported at the same time.

It is also noticed that the invention is not limited to the use of a specific error check code in the fifth octet of the variable length packet header. Although use the above mentioned ATM error check code would further increase the commonalities in processing the headers of ATM cells and variable length packets and accordingly reduce the duplication of hardware and/or software in the receiver, other error check codes could be used as well.

Furthermore, one should notice that the contents of the first four octets of the variable packet header in the above described preferred embodiment was only given by way of example. The person skilled in the art of communication networks will appreciate that even if the first four bytes are filled differently, the header processing hardware and the synchronization logic required for ATM based services and packet based services will be common to a large extent, and mere uploading of new software will enable the system to switch from operating in the ATM mode to operating in the packet based mode, or vice versa.

While the principles of the invention have been described above in connection with specific apparatus, it is to be clearly understood that this description is made only by way of example and not as a limitation on the scope of the claims.

## Claims

1. Method for encapsulating variable length data packets,
**CHARACTERIZED IN THAT** a five octet long packet header (PACKET-HDR) is added to each data packet, a fifth octet of said packet header constituting a header error check field (HEC).

2. Method for encapsulating variable length data packets according to claim 1,
**CHARACTERIZED IN THAT** said header error check field (HEC) comprises an Asynchronous Transfer Mode (ATM) compatible CRC code with generating polynomial x⁸+x²+x+1.

3. Method for encapsulating variable length data packets according to claim 1,
**CHARACTERIZED IN THAT** said packet header (PACKET-HDR) further comprises a length field (NPP) for indicating the length of said data packet.

4. Method for encapsulating variable length data packets according to claim 1,
**CHARACTERIZED IN THAT** said packet header (PACKET-HDR) further comprises an address field (PLA) for indicating a destination of said data packet.

5. Method for encapsulating variable length data packets according to claim 4,
**CHARACTERIZED IN THAT** said address field (PLA) comprises a multicast indication field (U/M) for indicating whether said destination is a multicast destination or a unicast destination, and a destination identifier field (ONU ID) for identifying said destination.

6. Method for encapsulating variable length data packets according to claim 5,
**CHARACTERIZED IN THAT** said address field (PLA) further comprises a traffic container identification field (T-Cont ID) for identifying a service class for data contained in said data packet, and a fragmentation indication field (FRAG) for indicating that said data packet contains a fragment of a larger message.

7. Method for encapsulating variable length data packets according to claim 1,
**CHARACTERIZED IN THAT** said packet header (PACKET-HDR) further comprises a padding field (PAD) for indicating an amount of padding bytes in said data packet.

8. Method for encapsulating variable length data packets according to claim 1,
**CHARACTERIZED IN THAT** said packet header (PACKET-HDR) further comprises a user to user indication field (UU) for indicating that said data packet contains an end fragment of a message.

9. Method for encapsulating variable length data packets according to claim 1,
**CHARACTERIZED IN THAT** said packet header (PACKET-HDR) is statically scrambled.

10. Method for decapsulating variable length data packets,
**CHARACTERIZED IN THAT** a five octet long packet header (PACKET-HDR) is extracted from each data packet, and a fifth octet comprised in a header error check field (HEC) of said packet header (PACKET-HDR) is used for header integrity checking.

11. Method for decapsulating variable length data packets according to claim 10,
**CHARACTERIZED IN THAT** byte and packet synchronization is achieved upon recognition of said header error check field (HEC) in a predetermined number of consecutive data packets.

12. Device for encapsulating variable length data packets,
**CHARACTERIZED IN THAT** said device comprises a packet header adder adapted to add to each data packet a five octet long packet header (PACKET-HDR), a fifth octet of said packet header constituting a header error check field (HEC).

13. Device for encapsulating variable length data packets according to claim 12,
**CHARACTERIZED IN THAT** said device is adapted to be used in an optical line termination (OLT) of a Passive Optical Network (PON) whereover both Asynchronous Transfer Mode (ATM) cells and said variable length data packets can be transferred.

14. Device for decapsulating variable length data packets,
**CHARACTERIZED IN THAT** said device comprises a packet header extractor adapted to extract a five octet long packet header (PACKET-HDR) from each data packet, and to supply a fifth octet in a header error check field (HEC) of said packet header (PACKET-HDR) to header integrity checking logic.

15. Device for decapsulating variable length data packets according to claim 14,
**CHARACTERIZED IN THAT** said device is adapted to be used in an otical network termination (ONT) of a Passive Optical Network (PON) whereover both Asynchronous Transfer Mode (ATM) cells and said variable length data packets can be transferred.
